Europäisches Patentamt

European Patent Office

Office européen des brevets

(11) Veröffentlichungsnummer: **0 520 533 A2**

# EUROPÄISCHE PATENTANMELDUNG

(21) Anmeldenummer: **92201554.0**

(22) Anmeldetag: **01.06.92**

(51) Int. Cl.5: **F23G 5/08**, F23J 3/04, F23J 15/00

(30) Priorität: **28.06.91 DE 4121347**

(43) Veröffentlichungstag der Anmeldung:
**30.12.92 Patentblatt 92/53**

(84) Benannte Vertragsstaaten:
**DE ES GB IT**

(71) Anmelder: **METALLGESELLSCHAFT Aktiengesellschaft Reuterweg 14 W-6000 Frankturt am Main(DE)**

(72) Erfinder: **Weber, Ekkehard, Prof. Dr. Amselweg 6 W-4300 Essen 17(DE)**

(54) **Verfahren zur Verbrennung von Abfällen.**

(57) Es wird ein Verfahren zur Verbrennung von Abfällen beschrieben, bei dem Abfälle - soweit notwendig - zerkleinert, anschließend ggf. mit Brennstoffen gemischt und danach bei Temperaturen von 1100 bis 1700°C verbrannt werden, wobei die Asche in flüssiger Form anfällt sowie zum überwiegenden Teil aus dem Verbrennungsraum als flüssige Schlacke abgeführt wird und wobei aus den gebildeten Verbrennungsabgasen die Schadstoffe abgetrennt werden. Das Verfahren ist dadurch gekennzeichnet, daß die im Abgas suspendierten flüssigen Ascheteilchen bei der Verbrennungstemperatur durch mindestens einen Massenkraftabscheider abgeschieden sowie anschließend entweder allein verfestigt oder mit der flüssigen Schlacke vereinigt und gemeinsam mit dieser verfestigt werden.

EP 0 520 533 A2

Die Erfindung bezieht sich auf ein Verfahren zur Verbrennung von Abfällen, bei dem die Abfälle - soweit notwendig - zerkleinert, anschließend ggf. mit Brennstoffen gemischt und danach bei Temperaturen von 1000 bis 1700°C verbrannt werden, wobei die Asche in flüssiger Form anfällt und zum überwiegenden Teil aus dem Verbrennungsraum als flüssige Schlacke abgeführt wird und wobei aus den gebildeten Verbrennungsabgasen die Schadstoffe abgetrennt werden.

Die Verbrennung von Abfällen - also von Haus- und Industriemüll, Sondermüll, landwirtschaftlichen Abfallprodukten sowie Klärschlamm - wird seit vielen Jahren in großem Maßstab durchgeführt, um Schadstoffe im Müll zu zerstören und die abzulagernde Abfallmenge erheblich zu vermindern. Bei der Verbrennung von Abfällen sind in der Vergangenheit immer wieder Probleme aufgetreten, denn sowohl die erzeugten Abgase als auch die anfallenden Aschen und Flugstäube enthalten toxische Stoffe, die als Umweltgifte wirken und durch aufwendige Verfahren aus den Abgasen, den Aschen und den Flugstäuben entfernt werden müssen. Beispielhaft sei hier auf die bei der Müllverbrennung entstehenden Dioxine hingewiesen, deren Bildung durch eine entsprechende Verfahrensführung weitgehend vermieden werden muß oder die durch Reinigungsprozesse aus den Verfahrensprodukten der Müllverbrennung abzutrennen sind. Insbesondere stellen die bei der Abfallverbrennung anfallenden Flugstäube, bei denen es sich um sehr feinteilige Asche handelt, ein erhebliches Umweltrisiko dar, denn sie enthalten sowohl hochgiftige organische Verbindungen - also Dioxine, halogenierte Furane und hochkondensierte aromatische Kohlenwasserstoffe - als auch Schwermetalle und Schwermetallverbindungen, wobei letztere zumindest teilweise bei Berührung mit Wasser gelöst werden und das Oberflächen- sowie das Grundwasser kontaminieren. Da die Flugstäube aus Abfallverbrennungsanlagen also erhebliche Mengen an Schadstoffen enthalten, sind sie als Sondermüll zu behandeln.

Es hat nicht an Versuchen gefehlt, die potentielle Gefährdung, die von den festen Rückständen der Abfallverbrennung und insbesondere von den Flugstäuben ausgeht, auszuschalten oder zu umgehen; allerdings hat sich immer wieder gezeigt, daß die bisher angewendeten Abfallverbrennungsverfahren feste Rückstände produzieren, die zwangsläufig erhebliche Schadstoffmengen enthalten. So ist aus der EP-OS 305 779 ein Verfahren zur Entsorgung von Abfallstoffen durch Verbrennung bekannt, bei dem die getrockneten Abfallstoffe in einem Zyklon bei Temperaturen oberhalb 1500°C verbrannt werden, wobei eine schadstoffarme schmelzflüssige Schlacke und ein heißes Abgas gebildet werden. Während die flüssige Schlacke aus einem dem Verbrennungszyklon nachgeschalteten Ofen abfließt, werden aus dem Abgas nach einer ersten Abgaskühlung durch partielle Kondensation im wesentlichen die Wertstoffe und nach wenigstens einer weiteren Abgaskühlung bei niedrigerer Temperatur durch partielle Kondensition im wesentlichen die Schadstoffe abgeschieden. Da im Abgas flüssige Ascheträpfchen suspensiert sind, fällt bei der partiellen Kondensation Flugstaub an, der schadstoffhaltig ist, oder bei der partiellen Kondensation fallen Wertstoffe an, die in nachteiliger Weise wegen ihres hohen Gehalts an Flugstaub nicht verwendbar sind, sondern ebenfalls als schadstoffhaltige feste Rückstände behandelt werden müssen.

Der Erfindung liegt daher die Aufgabe zugrunde, ein Abfallverbrennungsverfahren zu schaffen, dessen gasförmige Reaktionsprodukte schadstofffrei sind und dessen feste Rückstände so imobilisiert sind, daß in ihnen vorhandene Schadstoffe keine Gefährdung der Umwelt darstellen; die Schadstoffe sollen sich also gegenüber Luft, Wasser und Boden weitestgehend inert verhalten.

Die der Erfindung zugrundeliegende Aufgabe wird dadurch gelöst, daß die im Abgas suspendierten flüssigen schadstoffhaltigen Ascheträpfchen bei der Verbrennungstemperatur durch mindestens einen Massenkraftabscheider abgeschieden sowie anschließend entweder allein verfestigt oder mit der flüssigen Schlacke vereinigt und gemeinsam mit dieser verfestigt werden. Das erfindungsgemäße Verfahren zur Verbrennung des Abfalls ist also so durchzuführen, daß die bei Normaltemperatur festen Verbrennungsrückstände während des Verbrennungsprozesses in flüssiger Form anfallen und auch in flüssiger Form abgeschieden werden. Dies gilt sowohl für die aus dem Verbrennungsraum abfließende Asche als auch für die im Abgas suspendierten Ascheträpfchen. Die Abtrennung flüssiger Asche aus Abgasen wurde zwar bereits in der DE-OS 3 907 457 vorgeschlagen. Dennoch ist es überraschend, daß die bei der Müllverbrennung entstehenden festen Rückstände dann besonders umweltverträglich sind, wenn sie zunächst bei einer entsprechend hohen Verbrennungstemperatur in flüssiger Form anfallen, danach in flüssiger Form aus dem Verbrennungsraum bzw. dem Abgas abgeschieden werden und erst dann in eine feste Schlacke übergehen, die einen glasartigen Zustand hat und in der die Schwermetalle und Schwermetallverbindungen so eingebunden sind, daß sie weder von Wasser gelöst werden, noch mit der Luft oder dem Boden reagieren. Die Schlacke enthält ferner keine toxischen organischen Verbindungen, insbesondere keine Dioxine. Es ist vor allem überraschend, daß beim erfindungsgemäßen Verfahren kein toxischer Flugstaub, sondern eine feste, grobkörnige, glasartige Schlacke anfällt.

In vorteilhafter Ausgestaltung der Erfindung ist vorgesehen, daß - soweit der Wärmeinhalt des ABfalls nicht zur Produktion von flüssiger Asche ausreicht - als Brennstoff Kohle, Öl oder Gas verwendet wird, denn die gemeinsame Verbrennung von Kohle und Abfällen ermöglicht eine Beeinflussung des Ascheschmelzpunktes, während durch Gas oder Öl die Erzeugung von notwendiger zusätzlicher Wärme ermöglicht wird.

Nach der Erfindung werden als Massenkraftabscheider in vorteilhafter Weise mindestens ein Trägheitskraft- oder Prallabscheider und/oder mindestens ein Zyklon verwendet. Eine Kombination verschiedenartiger Massenkraftabscheider oder die Hintereinanderschaltung gleichartiger Abscheidertypen ist notwendig, wenn besonders niedrige Reingasstaubgehalte erforderlich sind. So wurde beispielsweise bei einem Gehalt von 6,5 g flüssiger Asche pro $Nm^3$ Abgas bei Verwendung eines Zyklons ein Gehalt an flüssiger Asche im Reingas von 30 mg/$Nm^3$ erzielt, während sich der Gehalt an flüssiger Asche im Reingas auf 7 mg/$Nm^3$ reduzieren ließ, wenn zwei hintereinander geschaltete Zyklone verwendet wurden.

Schließlich ist in weiterer Ausgestaltung der Erfindung vorgesehen, daß aus dem von den flüssigen Aschetröpfchen befreiten und abgekühlten Abgas die Schadstoffe $SO_2$, $SO_3$, HF, HCl, NO, $NO_2$ und im Abgas noch vorhadene geringe Mengen an Schwermetallen sowie die Schwermetallverbindungen durch an sich bekannte trocken-, quasitrocken- und/oder naßarbeitende Abgasreinigungsprozesse abgetrennt werden.

Das von flüssiger Asche weitgehend befreite Abgas, dessen Temperatur 900 bis 1600°C beträgt, kann zur Wärmeerzeugung genutzt werden. Nach dadurch erfolgter Abkühlung kann das Abgas einem trocken-, naß- oder quasi-trocken arbeitenden Abgasreinigungsverfahren zugeführt werden. Bei einer Abgaswäsche werden die noch im Abgas enthaltenen Schadstoffe $SO_2$, $SO_3$, HF, HCl, NO, $NO_2$ und - wenn überhaupt - sehr geringe Konzentrationen an Schwermetallen sowie Schwermetallverbindungen durch Behandlung mit verschiedenen wäßrigen alkalischen Lösungen weitgehend abgetrennt. Bei einer quasi-trocken arbeitenden Abgasreinigung werden wäßrige Suspensionen von CaO und/oder Ca(OH)$_2$ sowie Aktivkohle in den Abgasstrom eingebracht, das Wasser wird gemäß dem Prinzip der Sprühtrocknung verdampft, und es fällt ein fester Rückstand an, der mit den im Abgas enthaltenen Schadstoffen beladen ist. Bei einem trocken arbeitenden Reinigungsverfahren werden vorzugsweise CaO und Ca(OH)$_2$ sowie Aktivkohle in den Abgasstrom eingebracht, wobei die Schadstoffe chemisch gebunden und adsorbiert werden.

**Patentansprüche**

1. Verfahren zur Verbrennung von Abfällen, bei dem die Abfälle zerkleinert, anschließend ggf. mit Brennstoffen gemischt und bei Temperaturen von 1000 bis 1700°C verbrannt werden, wobei die Asche in flüssiger Form anfällt sowie zum überwiegenden Teil aus dem Verbrennungsraum als flüssige Schlacke abgeführt wird und wobei aus den gebildeten Verbrennungsabgasen die Schadstoffe abgetrennt werden, dadurch gekennzeichnet, daß die im Abgas suspendierten flüssigen Aschetröpfchen bei der Verbrennungstemperatur durch mindestens einen Massenkraftabscheider abgeschieden sowie anschließend entweder allein verfestigt oder mit der flüssigen Schlacke vereinigt und gemeinsam mit dieser verfestigt werden.

2. Verfahren nach Anspruch 1, dadurch gekennzeichnet, daß als Brennstoff Kohle, Öl oder Gas verwendet wird.

3. Verfahren nach den Ansprüchen 1 bis 2, dadurch gekennzeichnet, daß als Massenkraftabscheider mindestens ein Trägheitskraft- oder Prallabscheider und/oder mindestens ein Zyklon verwendet wird.

4. Verfahren nach den Ansprüchen 1 bis 3, dadurch gekennzeichnet, daß aus dem von den flüssigen Aschetröpfchen befreiten, abgekühlten Abgas die Schadstoffe $SO_2$, $SO_3$, HF, HCl, NO, $NO_2$ und im Abgas noch vorhandene geringe Mengen an Schwermetallen sowie die Schwermetallverbindungen durch an sich bekannte trocken-, quasi-trocken- und/oder naßarbeitende Abgasreinigungsprozesse abgetrennt werden.